# EUROPEAN PATENT APPLICATION

(11) **EP 4 657 881 A1**
(43) Date of publication of application: **03.12.2025**
(21) Application number: 24178572.4
(22) Date of filing: 28.05.2024
(51) Int. Cl.: H04R 1/02, H04R 5/02

(54) **REMOVABLE AND PROGRAMMABLE SENSITIVE SOUND EFFECT SPEAKER SOCKET**

(71) Applicant: Harman International Industries, Incorporated, Stamford, CT 06901 (US)
(72) Inventor: AMTHOR, Peter, 81827 Munich (DE)
(74) Representative: Rummler, Felix

(57) **Abstract**

A programmable socket comprising a housing with a first surface and a second surface opposite to the first surface. The programmable socket further comprising a male electrical connector protruding from the first surface, the male electrical connector operable to engage with a female electrical connector of a socket and a female electrical connector on the second surface, the female electrical connector operable to receive a second male electrical connector. The programmable socket further comprising an electronic circuit within the housing, the electronic circuit comprising at least one sensor, a wireless communication interface, at least one loudspeaker, a processor and memory coupled to the at least one sensor, the wireless communication interface and the at least one loudspeaker.

## Description

The present invention relates to a removable socket that can be programmed by a user equipment device to play back sound effects when changes are detected in the vicinity of the socket.

### BACKGROUND OF THE INVENTION

Sockets are known in the industry to provide electricity (by means of an electrical current) to electric devices. With the emergence of "smart" technology, i.e. technology that enables electronic devices to connect to other devices and operate interactively and autonomously, particularly in the home environment, there is a growing demand to provide additional devices and services that make use of such technology.

Retrofitting smart devices is often a costly affair that requires the purchase of new and expensive devices when the previous devices were still functioning. This is especially true, when the purchase of the new device was made solely to incorporate new "smart" functions. Thus, there is a demand to provide a simpler solution of providing improved services and functionality in the home environment without the need to purchase mechanically sophisticated and expensive devices. There is a need to provide such smart technology at a reduced cost and in a simple-to-use manner. It is an aim of this invention to address the above issues.

### SUMMARY

To achieve the above objectives, the present disclosure sets out a programmable socket including an electronic circuit and a system including a plurality of programmable sockets as set out in the claims below.

In an embodiment, a programmable socket is provided. The programmable socket includes a housing with a first surface and a second surface opposite to the first surface, a male electrical connector protruding from the first surface, the male electrical connector operable to engage with a female electrical connector of a socket, a female electrical connector on the second surface, the female electrical connector operable to receive a second male electrical connector, and an electronic circuit within the housing. The electronic circuit includes at least one sensor, a wireless communication interface, at least one loudspeaker, a processor and memory, wherein the processor and memory are coupled to the at least one sensor, the wireless communication interface and the at least one loudspeaker. Advantageously, a removable wall socket is provided that incorporates smart-home features by being able to connect with other devices (by means of the wireless communication interface), by being able to sense what is happening in the programmable socket's vicinity (by means of the plurality of sensors), and by being able to engage with a user (by means of the loudspeakers) while maintaining the standard feature of an electrical socket. This can provide a personalized audio (sound effect) experience wherever a wall socket is available.

In an embodiment, the wireless communication interface includes a transceiver that is operable to receive data from a user equipment device and send the received data to the memory of the electronic circuit. The data includes sound files, and playback settings. The playback settings may, for example, including volume settings, loop functionality, playing back certain sounds in sequence to other sounds, and/or an association with a specific trigger. Advantageously, the programmable socket can be configured by a device to play back different sound effects (for example, a "ring" or a "hello") depending on specific scenarios and to play back sound effects differently (for example, looping the sound, playing back certain sounds in sequence to other sounds, playing the sound back at different volumes, etc.) depending on specific scenarios.

In an embodiment, the electronic circuit is operable to receive (by the at least one sensor) a signal, send the signal to the processor, retrieve (by the processor and the memory) a sound file and playback settings associated with the at least one sensor, and play back (by the at least one loudspeaker) the sound file with the playback settings associated with the at least one sensor. Advantageously, the programmable socket can store instructions and sound effects and can, thus, remember to play back certain (for example, a "hello") when specific events happen (for example, a door is opened).

In an embodiment, the at least one loudspeaker is operable to play back a first stored sound file when a first one of the at least one sensors is engaged, play back the first stored sound file or a second stored sound file when a second one of the at least one sensors is engaged, playback the first stored sound file, the second stored sound file or a third stored sound file when two or more of the at least one sensors are engaged, or playback the first stored sound file, the second stored sound file, the third stored sound or a fourth stored sound file when three or more of the at least one sensors are engaged. Advantageously, the programmable socket can be programmed to inform a user of different things occurring in the vicinity. For example, a first sound can be programmed to play back when a door is opened, a second sound can be programmed to play back when a light is switched on, and a third sound can be programmed to play back when a door is opened and a light is simultaneously switched on.

In an embodiment, the at least one loudspeaker is operable to play back the first stored sound file with first playback settings, play back the second stored sound with second playback settings, play back the third stored sound file with third playback settings, or play back the fourth stored sound file with fourth playback settings. This provides the advantage of playing back different sounds at different volumes depending on what the at least one sensor senses. For example, a first sound may be played back once at a low volume when a light is switched on. A second sound may be played back at a louder volume and repeatedly (for example, until the user takes an action) when a certain level of electricity consumption is detected by a sensor of the programmable socket.

In an embodiment, the at least one sensor includes a noise sensor, a motion sensor, a light sensor, a temperature sensor, an electricity consumption meter, or any combination of the above. Advantageously, the programmable socket has a multitude of sensing functions and can be utilized in a plurality of different smart home applications.

In an embodiment, the electricity consumption meter is operable to detect an amount of current drawn from the socket when an electrical device is plugged into the female electrical connector, and wherein the loudspeaker is operable to playback a sound file when the current drawn from the socket is: at a predetermined threshold, above the predetermined threshold, or below the predetermined threshold. Advantageously, the programmable socket can be used as a power-measuring device. For example, the programmable socket can be used to alert a user when an electronic device (for example, a mobile phone or other device) is charged (this can be determined, for example, because less power is consumed) by playing back a jingle.

In an embodiment, a first of the at least one loudspeaker is operable to play back a first sound file, a second of the at least one loudspeakers is operable to play back a second sound file, a third of the at least one loudspeakers is operable to play back a third sound file, and/or a fourth of the at least one loudspeakers is operable to play back a fourth sound file. This provides the advantage of playing back different sounds at the same time to inform the user that multiple occurrences are taking place in the vicinity and to specifically tell the user what those occurrences are (for example, playback of a "hello" and also a jingle can inform the user that both a light is switched on and an electrical device is charged). Further advantages include being able to create an audio-immersion by, for example, playing some sound towards the left, the right, up or down to draw different attention in different directions.

In an embodiment, the electronic circuit is powered by a current provided by the socket. The programmable socket may further include a battery operable to provide power to the electronic circuit when the current drops below a predetermined threshold. Advantageously, the programmable socket can still function when there is a power outage. Furthermore, the programmable socket can still function when it is being moved from one electrical socket to another electrical socket. A further advantage is that the memory can still be powered to prevent data loss during a power outage.

In an embodiment, the male electrical connector and the female electrical connector each include a positive electrical connection, a negative electrical connection, and a ground electrical connection. The positive electrical connection of the male electrical connector is coupled to the positive electrical connection of the female electrical connector. The negative electrical connection of the male electrical connector is coupled to the negative electrical connection of the female electrical connector; and the ground electrical connection of the male electrical connector is coupled to the ground electrical connection of the female electrical connector. Advantageously, the programmable socket maintains its function of an electrical socket.

In an embodiment, the programmable socket further comprises a fuse electrically coupled between the male electrical connector and the electronic circuit. Advantageously, the electronic circuit and also any electrical device plugged into the female electrical connector of the programmable socket are protected from short circuits, thereby preventing damage to electrical goods and also providing an additional level of safety in a smart home.

In another embodiment, a system including a plurality of programmable sockets as set out above is provided. A first of the plurality of programmable sockets is operable to send a command, by the wireless communications interface of the first programmable socket, to a second of the plurality of programmable sockets. The command is sent when at least one of the sensors of the first of the plurality of programmable sockets detects a signal, and the second of the plurality of programmable sockets plays back a sound file from the at least one loudspeaker of the second programmable socket when the second of the plurality of programmable sockets receives the command. Advantageously, a user located away from the sensed occasion can be alerted to an occasion. For example, a programmable socket that detects a door opening in a first room may send a command to play back a sound file at all (or a different) programmable socket, thereby ensuring that a user in a second room is made aware of the door opening in the first room.

In an embodiment, the system further includes a communication network, wherein the wireless communications interface of each of the plurality programmable sockets is operable to send the command to the communication network and wherein the communication network is operable to send the command to the each of the plurality of programmable sockets. Advantageously, the data can be stored in the communication network which reduces the burden of storage and processing requirements on the programmable socket. This provides a simpler and more cost-efficient programmable socket (and system of programmable sockets). The communication network may include a user equipment device. This provides a further ease of use for a user and reduces the burden of cost because fewer components are required.

### BRIEF DESCRIPTION OF THE DRAWINGS

The features, objects, and advantages of the present disclosure will become more apparent from the detailed description set forth below when taken in conjunction with the drawings in which like reference numerals refer to similar elements.
Figure 1 depicts a side-view line drawing of a removable and programmable sound effect speaker socket according to an embodiment of the invention;
Figure 2 depicts a front-view line drawing of a removable and programmable sound effect speaker socket according to an embodiment of the invention;
Figure 3 depicts a system including a plurality of removable and programmable sound effect speaker socket according to an embodiment the invention.

### DETAILED DESCRIPTION

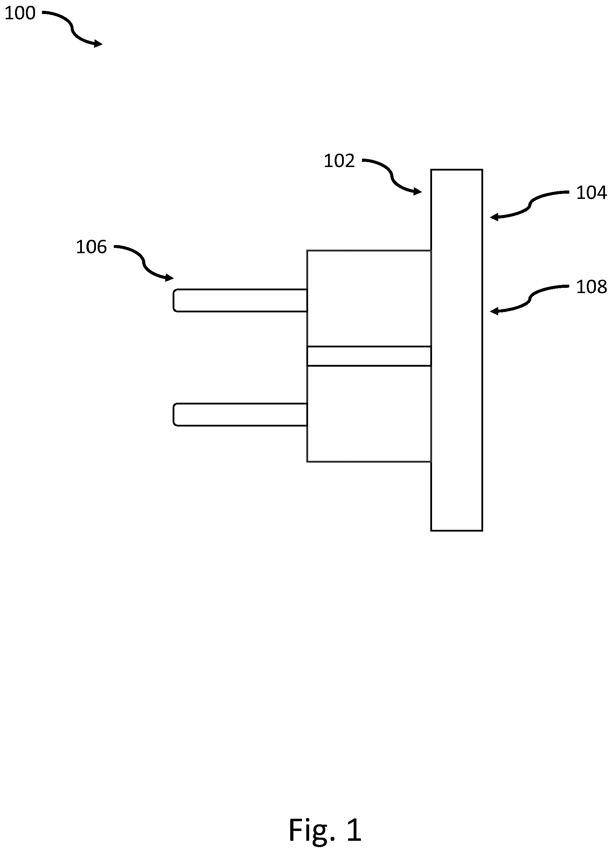

Figure 1 depicts a side-view image of a programmable socket 100 that has a housing with a first surface 102 and a second surface 104 opposite to the first surface 102. The first surface 102 has a male electrical connector 106 protruding from the first surface 102, wherein the male electrical connector 106 is operable to engage with a female electrical connector of a socket (not shown). The programmable socket 100 also has a female electrical connector 108 on the second surface 104, wherein the female electrical connector 108 is operable to receive a second male electrical connector. The housing may be made of any material suitable for insulating the electric current. For example, the housing may be made of any type of plastic, ceramic, acrylic or glass. However, the housing may also be made of a metal (or may include metal components) so long as the metal components of the housing are insulated from live currents when the programmable socket is engaged with (plugged into) a live current.

The male electrical connector 106 may be a plug that protrudes from the housing and that includes at least one conductive prong. The at least one conductive prong may be made out of metal or any other suitable conductive material. In some arrangements, the at least one conductive prong may include conductive and non-conductive components, wherein the non-conductive components provide a safety element when a user handles the programmable socket 100. The at least one conductive prong may have a cylindrical shape, a cuboid shape, a triangular prism shape, or any other 3-dimensional shape. It may also be a combination of the above shapes. Where a plurality of conductive prongs are present, each conductive prong may have a different shape. The conductive prongs may be shaped such that the programmable socket 100 is suitable to be plugged into a socket in according to the region for which the programmable socket 100 is destined. For example, the conductive prongs (and, accordingly, the plug) may have a shape suitable to be plugged into a socket in the North American, European, United Kingdom, Latin America, South America, Asia-Pacific, Middle East and Africa, regions and any other suitable region. The male electrical connector 106 may include at least one conductive prong that is retractable such that the male electrical connector 106 can be plugged into a socket from all of the above regions. The male electrical connector 106 is not limited to a plug for a socket and may, for example, be a male USB plug.

The female electrical connector 108 may be a socket that is suitable for engaging (for example, receiving) a male electrical socket (for example a plug) from an electrical component (for example, any type of electrical device and/or any type of extension lead). The female electrical connector 108 may be recessed into the second surface 104 or it may be flush with the second surface 104. The female electrical connector 108 may have a plurality of recessed holes. Each of the recessed holes may have at least one electrical contact which is electrically coupled to a corresponding electrical contact of the male electrical connector 106. For example, one electrical contact in a recessed hole may be electrically coupled to a conductive prong (of the plug) of the male electrical connector 106. The plurality of recessed holes may be shaped such that a male electrical socket of an electrical component may be plugged into the programmable socket 100 according to the region for which the programmable socket 100 is destined. For example, the recessed holes (and, accordingly, the socket) may have a shape suitable to receive a plug from the North American, European, United Kingdom, Latin America, South America, Asia-Pacific, Middle East and Africa, regions and any other suitable region. The recessed holes may be shaped such that the female electrical connector 108 can receive plugs from all of the above regions. The female electrical connector 108 is not limited to a socket for a plug and may, for example, be a female USB plug.

In an embodiment, the male electrical connector 106 and the female electrical connector 108 may each include a positive electrical connection, a negative electrical connection, and a ground electrical connection. In the male electrical connector 106, the positive electrical connection, negative electrical connection, and ground electrical connection may each have a conductive prong as described above. In some embodiments, the ground electrical connection may have two or more electrical connectors which may or may not be prongs. In the female electrical connector 108, the positive electrical connection, negative electrical connection, and ground electrical connection may each have a recessed hole as described above. In some embodiments, the ground electrical connection may instead have two recessed holes or simply two conductive contacts that are not in a recessed hole.

The positive electrical connection of the male electrical connector 106 may be coupled to the positive electrical connection of the female electrical connector 108. The negative electrical connection of the male electrical connector 106 may be coupled to the negative electrical connection of the female electrical connector 108. The ground electrical connection of the male electrical connector 106 may be coupled to the ground electrical connection of the female electrical connector 108. Advantageously, the programmable socket maintains its function of an electrical socket while also including the programmable circuit as described below. In some embodiments, this electrical connection (for example between prong and recessed hole) may be direct. However, the electrical connection may instead have other components placed between the corresponding male and female electrical connectors (for example, a fuse and/or a programmable circuit may be wired between the electrical connections).

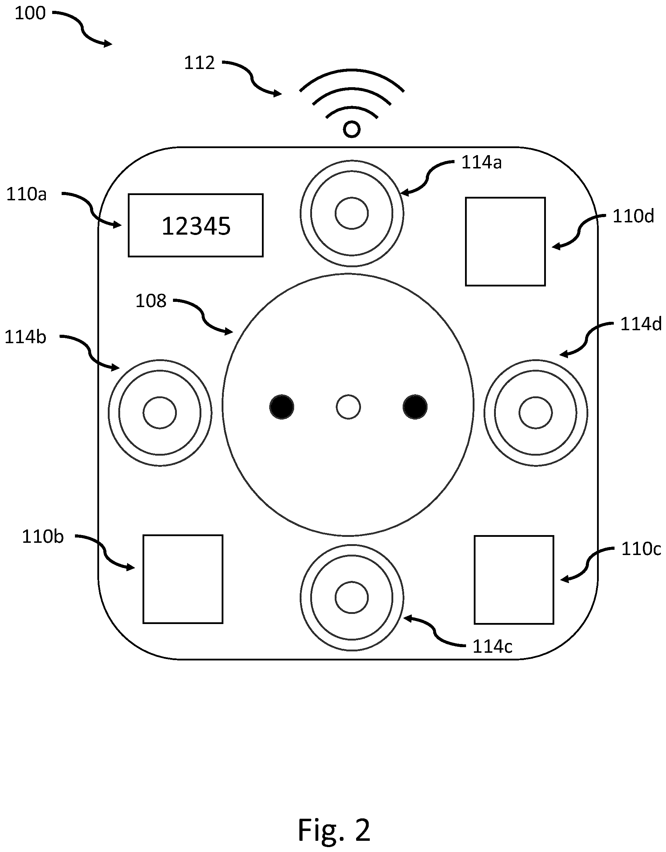

Figure 2 depicts a front-view image of the programmable socket 100 of Figure 1. In addition to the components described above with relation to Figure 1, the programmable socket 100 also has an electronic circuit within the housing. The electronic circuit has at least one sensor 110a, 110b, 110c and 110d (herein referred to as 110 or 110a-d), a wireless communication interface 112 and at least one loudspeaker 114a, 114b, 114c and 114 d (herein referred to as 114 or 114a-d). The electronic circuit also has a processor and memory (not shown) coupled to the at least one sensor 110, the wireless communication interface 112 and the at least one loudspeaker 114. Advantageously, a portable and easily manufacturable removable wall socket is provided that incorporates smart-home features by being able to connect with other devices (by means of the wireless communication interface), by being able to sense what is happening in the programmable socket's vicinity (by means of the plurality of sensors), and by being able to engage with a user (by means of the loudspeakers) while maintaining the standard feature of an electrical socket. This can provide a personalized audio (sound effect) experience wherever a wall socket is available. Moreover, this provides an integrated device with a very small footprint that is mobile and portable, which adds a new element to the smart-home and consumer audio product range. With the present invention, a personalized audio (sound effect) experience can be provided (as will be described in more detail below) wherever a wall socket is available.

In some embodiments, the processor and memory may be part of a small, low-power and low footprint computer, such as a microcontroller unit (MCU). This provides the additional advantage of requiring less power than a conventional processor and memory set-up in a typical consumer electronic product (such as an audio product).

The at least one sensor 110a-d may include a noise sensor, a motion sensor, a light sensor, a temperature sensor, an electricity consumption meter, or any combination of the above. The number of sensors is not limited to one or any other number. Furthermore, the type of sensor is not limited to the above-mentioned types of sensors and may include any other suitable sensor. The at least one sensor provides the programmable socket 100 with a multitude of sensing functions which can be utilized in a plurality of different smart-home applications.

In an embodiment, the electricity consumption meter 110a may be operable to detect an amount of current drawn from the socket when an electrical device is plugged into the female electrical connector. The electricity consumption meter may have a current measuring device, that is operable to detect a flow of current between the male electrical connector 106 and the female electrical connector 108 (thus, indicating that the programmable socket 100 is plugged into a socket/wall socket and that an electrical device is plugged into the programmable socket 100 and is drawing a current). The electricity consumption meter 110a may be able to detect fluctuations of current drawn. The programmable circuit 100 may include a display (for example, a liquid crystal display (LCD), a light emitting diode (LED) display, or any other suitable display) that can show an amount of current used, for example, by way of numbers or symbols shown on the display. This is represented in Figure 2 at reference numeral 110a. In some embodiments, the display may be integrated as part of the electricity consumption meter 110a. In other embodiments, the display may be separate from the electricity consumption meter 110a.

Additionally or separately the at least one loudspeaker 114a-d may play back a sound file when a current is drawn from the socket (or when a current drawn from the socket changes). For example, when an electrical device (such as a mobile phone charger that is charging a mobile phone) is plugged into the female electrical connector 108, a current may be drawn. When this happens, the electricity consumption meter 110a may send a signal to the processor, which may instruct the at least one loudspeaker 114a-d to play back a sound file. When the mobile phone plugged into the mobile phone charger is fully charged, the current drawn may suddenly drop (to zero or close to zero). At this stage, the electricity consumption meter 110a may send another signal to the processor, which may instruct the at least one loudspeaker 114a-d to play back the same or a different sound file. Similarly, when the mobile phone charger is removed from the programmable socket 100, the electricity consumption meter 110a may detect a sudden drop in current that is different to that when the mobile phone is charged. Accordingly, the electricity consumption meter 110a may send yet another a signal to the processor, which may instruct the at least one loudspeaker 114a-d to play back a sound file (which may be the same or different to the sound files mentioned above). The processor and memory may be programmed to play back different sound files depending on the type of current drop/increase. Advantageously, the programmable socket can be used as a power-measuring device. For example, the programmable socket can be used to alert a user when an electronic device (for example, a mobile phone or other device) is charged (this can be determined, for example, because less power is consumed) by playing back a jingle.

In an embodiment, the noise sensor 110b, 110c, 110d may be operable to detect levels of noise (in the decibel (dB) range), specific patterns of noise, specific melodies, and/or rhythms. In a similar manner to the electricity consumption meter 110a, the noise sensor 110b, 110c, 110d may send a signal to the processor when a noise is detected. The dB range, the specific patterns, the specific melodies, and/or the rhythms at which the noise sensor detects and sends a signal can be programmed into the processor. The noise sensor can be programmed to detect different noises (as described above) and to send different signals to the processor depending on what noises are detected. For example, if the noise sensor detects a short bang it may send a first-type signal to the processor. If the noise sensor detects a voice, it may send a second-type signal to the processor. Similarly, to the electrical consumption meter 110a, the processor may perform a look-up operation in the memory to search for the sound file that corresponds to the type of signal received and, accordingly play back the assigned sound file. The processor may play back a different sound file for each different type of noise sensed.

The motion sensor 110b, 110c, 110d may be any type of suitable proximity sensor. The motion sensor may detect the presence of an object (for example, a box or a door) in front of it or the removal of an object in front of it. For example, when placed in front of a door, the motion sensor may detect the opening or closing of that door. The motion sensor may also detect movement of a person or an animal (for example a person or an animal walking past the motion sensor). When a movement as described above is detected by the motion sensor, the motion sensor may trigger a signal to be sent to the processor and memory, similar to that of the other sensors described above. The processor may then perform a look-up operation in the memory to search for the sound file that corresponds to the type of signal received and, accordingly play back the assigned sound file.

The light sensor 110b, 110c, 110d may be any type of suitable light sensor. The light sensor may detect the presence or absence of light (for example, absolute darkness and absolute brightness) however, it may also detect differences in brightness of light (for example, an adjustment from a high level of brightness to a lower level of brightness). The light sensor may also be able to detect differences in colour of light present. When light, the absence of light, a change in brightness, a specific colour, and/or a change in colour are detected by the light sensor, the light sensor may trigger a signal to be sent to the processor and memory, similar to that of the other sensors described above. The processor may then perform a look-up operation in the memory to search for the sound file that corresponds to the type of signal received and, accordingly play back the assigned sound file.

The temperature sensor 110b, 110c, 110d may be any type of suitable temperature sensor (for example, a thermometer). The temperature sensor may detect differences in temperature and may also detect the presence of a specific temperature (for example, 22°C). When a temperature drop, a temperature rise, or a specific temperature is detected by the temperature sensor, the temperature sensor may trigger a signal to be sent to the processor and memory, similar to that of the other sensors described above. The processor may then perform a look-up operation in the memory to search for the sound file that corresponds to the type of signal received and, accordingly play back the assigned sound file.

The wireless communication interface 112 as shown in Figure 2 may have a transceiver that is operable to receive data from a user equipment device, and send the received data to the memory of the electronic circuit so that the received data is stored on the memory of the electronic circuit. The transceiver may be compatible with BlueTooth, WiFi, near-field chip (NFC), a mesh network, or any other suitable close proximity communication between a user equipment device and the programmable socket 100. Advantageously, the programmable socket 100 can communicate directly with (for example, be controlled and programmed by) a user equipment device in the vicinity. This overcomes the need for a subscription with a network provider and also the need for complicated, costly and high power-consuming transceivers. The user equipment device may be any suitable device that has a user interface and can communicate with the programmable socket 100 via the networks described above.

The data may include sound files, and playback settings. The sound files may be short sound files of any suitable format. This may include lossy format (for example, MP3, AAC, etc.), lossless format (for example, FLAC, ALAC, etc.), uncompressed format (WAV, AIFF, DSD, etc.) or any other suitable audio format. In a preferred embodiment, the sound files are in lossy format to reduce the memory requirements of the programmable socket 100. The sound files are not limited in any way and may, for example, be pre-recorded (for example, by the user), may come from a database that is (or is not) associated with the programmable socket 100, and/or may be a sample of a larger sound file.

The playback settings may, for example, including volume settings, loop functionality, playing back certain sounds in sequence to other sounds, and/or an association with a specific trigger. The specific trigger may be associated with the sensors 110a-110d as described above. Each of the following (non-exhaustive list) may have a unique and specific trigger: detection of a current drawn from the circuit, detection of a change of current drawn from the circuit, detection of a current no longer being drawn from the circuit, detection of a current being above/below/at a predetermined threshold, detection of a change in dB range, detection of a change in specific noise pattern, detection of specific melody, detection of a specific rhythm, detection of a movement by the motion sensor, detection of light, detection of the absence of light, detection of a change in brightness, detection of a specific colour, detection of a change in colour, detection of a temperature drop, detection of a temperature rise, and/or detection of a specific temperature.

Advantageously, the programmable socket 100 can be configured by a device to play back different sound effects (for example, a "ring" or a "hello") depending on specific scenarios and to play back sound effects differently (for example, looping the sound, playing the sound back at different volumes, playing back certain sounds in sequence to other sounds, etc.) depending on specific scenarios. The programmable socket 100 can store the sound files and playback settings such that the programmable socket 100 does not require the user equipment device to function and is, instead, a stand-alone device once it has been programmed. The programmable socket 100 is re-programmable by re-connecting the user equipment device to the programmable socket by means of the wireless communication interface and by uploading new data to the programmable socket 100. This can be done, for example, by means of a program (for example, an application) on the user equipment device. Data can also be deleted selectively from the programmable socket 100 with the program on the user equipment device. When the user equipment device is connected to the programmable socket 100, a user can see which data is stored on the programmable socket 100 on the user interface of the user equipment device.

In an embodiment, the electronic circuit may be operable to receive (by the at least one sensor 110a-110d) a signal (for example, when the sensor detects a trigger) and to send the signal to the processor. The processor may be operable to retrieve a sound file and playback settings (from the memory) associated with the at least one sensor (and optionally associated with the specific trigger). Subsequently, the processor may send a signal to the at least one loudspeaker 114a-114d such that the at least one loudspeaker 114a-114d play back the sound file with the playback settings associated with the at least one sensor (and optionally associated with the specific trigger). Advantageously, the programmable socket can store instructions and sound effects and can, thus, remember to play back certain (for example, a "hello") when specific events happen (for example, a door is opened).

Each of the at least one loudspeaker 114a to 114d may be any suitable type of loudspeaker that is capable of playing back the sound files. As mentioned above, the at least one loudspeaker 114a to 114d may play back different sound files depending on which sensor sent a signal (i.e. was triggered) and what type of signal that sensor (or sensors) has (have) sent to the processor. For example, the at least one loudspeaker may be operable to play back a first stored sound file when a first one of the at least one sensors is engaged. Alternatively, the at least one loudspeaker may play back the first stored sound file or a second stored sound file when a second one of the at least one sensors is engaged.

The at least one loudspeaker 114a to 114d may playback a different sound file when two or more sensors are engaged (i.e. have sent signals, and/or have received different triggers). In such an instance the at least one loudspeaker may playback the first stored sound file, the second stored sound file or a third stored sound file when two or more of the at least one sensors are engaged. Alternatively, the at least one loudspeaker may playback the first stored sound file, the second stored sound file, the third stored sound or a fourth stored sound file when three or more of the at least one sensors are engaged. Advantageously, the programmable socket 100 can be programmed to inform a user of different things occurring in the vicinity. For example, a first sound can be programmed to play back when a door is opened, a second sound can be programmed to play back when a light is switched on, and a third sound can be programmed to play back when a door is opened and a light is simultaneously switched on.

In an embodiment, the at least one loudspeaker 114a to 114d may play back the first stored sound file with first playback settings (for example, different volume, on a loop, etc. as described above), play back the second stored sound with second playback settings, play back the third stored sound file with third playback settings, or play back the fourth stored sound file with fourth playback settings. This provides the advantage of playing back different sounds at different volumes depending on what the at least one sensor senses. For example, a first sound may be played back once at a low volume when a light is switched on. A second sound may be played back at a louder volume and repeatedly (for example, until the user takes an action) when a certain level of electricity consumption is detected by a sensor of the programmable socket.

In an embodiment, a first 114a of the at least one loudspeakers 114a to 114d may play back a first sound file, a second 114b of the at least one loudspeakers 114a to 114d may play back a second sound file, a third 114c of the at least one loudspeakers 114a to 114d may play back a third sound file, and/or a fourth 114d of the at least one loudspeakers 114a to 114d may play back a fourth sound file. This provides the advantage of playing back different sounds at the same time to inform the user that multiple occurrences are taking place in the vicinity and to specifically tell the user what those occurrences are (for example, playback of a "hello" and also a jingle can inform the user that both a light is switched on and an electrical device is charged). Further advantages include being able to create an audio-immersion by, for example, playing some sound towards the left, the right, up or down to draw different attention in different directions. By directing specific sounds to specific directions, improves the adaptability of the programmable socket is improved. For example, the programmable socket may be adapted to detect movement (from the motion sensor) of mice/critters (for example, by detecting specific movements at a certain time of the day in a certain type of repetition) and also sounds (from the noise detector) that resemble noises of mice/critters. When these criteria are met, one set of the loudspeakers 114a to 114c may be programmed to play back a high-pitch noise to deter the mice. Meanwhile, the other loudspeakers may simultaneously play back different sounds, depending on the activity of other sensors 110a to 1 10d. Similarly, this opens up the adaptability of using one or more programmable sockets 100 as a dog fence.

In an embodiment, the electronic circuit may be powered by a current provided by the socket. The programmable socket 100 may also have a battery (which may be re-chargeable or single-use) operable to provide power to the electronic circuit when the current drops below a predetermined threshold (for example, during a power-outage or when the programmable socket 100 is removed from a wall socket/socket). Advantageously, the programmable socket 100 can still function when there is a power outage. Furthermore, the programmable socket 100 can still function when it is being moved from one electrical socket to another electrical socket. A further advantage is that the memory can still be powered to prevent data loss during a power outage.

In an embodiment, the programmable socket may have a fuse electrically coupled between the male electrical connector 106 and the electronic circuit. Advantageously, the electronic circuit and also any electrical device plugged into the female electrical connector 108 of the programmable socket are protected from short circuits, thereby preventing damage to electrical goods and also providing an additional level of safety in a smart-home.

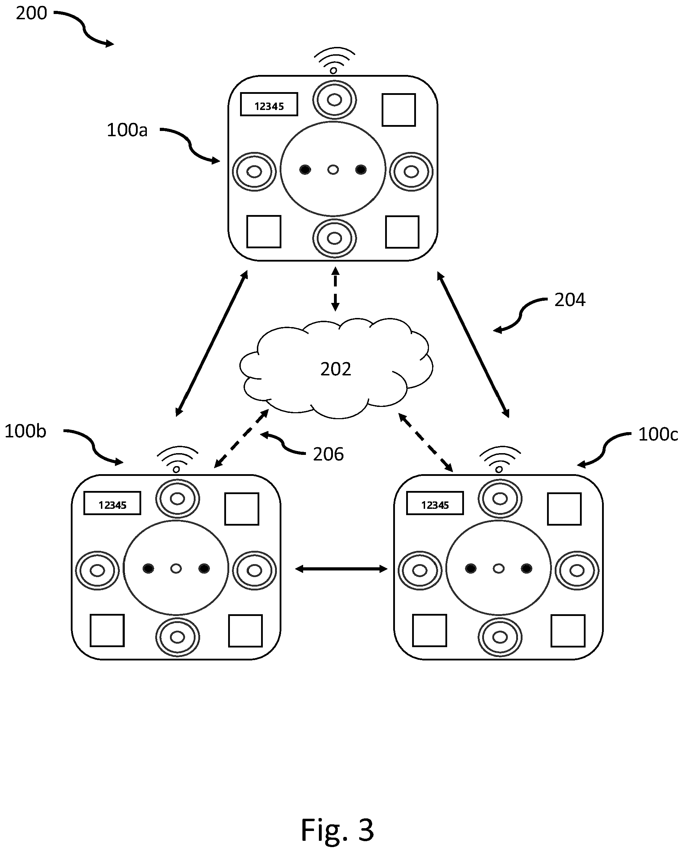

Figure 3 shows a system 200 having a plurality of programmable sockets 100 as defined above with relation to Figures 1 and 2 (labelled herein also as 100a to 100c) and also a communication path 204 (see solid lines) between programmable socket 100a and 100b, a communication path between programmable socket 100a and 100c, and a communication path between programmable socket 100b and 100c. System 200 is not limited to three programmable sockets and may include any plurality of programmable sockets 100 (for example, as little as two and any number above that). The communications paths 204 are preferably wireless.

A first of the plurality of programmable sockets 100a is operable to send a command, by the wireless communication interface 112 of the first programmable socket, to a second of the plurality of programmable sockets 100b, 100c. The second of the plurality of programmable sockets may receive the command by means of its own wireless communication interface 112. The command may be a signal from the first programmable socket 100a to play back a sound file on the second programmable socket 100b, 100c. The command may be sent to a plurality of other programmable sockets and is not limited to one "second" programmable socket (for example, the command may be sent to all of the programmable sockets in a network of programmable sockets, or the command may be sent directly to one or more specific programmable sockets within the network of programmable sockets).

The command is sent when at least one of the sensors of the first of the plurality of programmable sockets detects a signal (for example, from a sensor as described above). The second of the plurality of programmable sockets plays back a sound file from the at least one loudspeaker of the second programmable socket when the second of the plurality of programmable sockets receives the command. The sound file played back at the second one of the plurality of programmable sockets may be stored on the second one of the plurality of programmable sockets or it (the sound file) may be transferred from the first one of the plurality of the programmable sockets to the second one of the plurality of programmable sockets.

Advantageously, a user located away from the sensed occasion can be alerted to an occasion. For example, a programmable socket that detects a door opening in a first room may send a command to play back a sound file at all (or a different) programmable socket, thereby ensuring that a user in a second room is made aware of the door opening in the first room.

In an embodiment, the system 200 may have communication network 202 (for example, a wireless router or similar), wherein the wireless communications interface of each of the plurality programmable sockets 100a to 100c is operable to send the command to the communication network (for example, by means of communication path 206 (dashed lines)). In such an arrangement, each of the plurality of programmable sockets 100a to 100c may be in direct communication with the communication network 202 by means of each of the communication paths 206. The communications paths 206 are preferably wireless. The communication network 202 may send the command to the each of the plurality of programmable sockets (via communication paths 206). Advantageously, the data can be stored in the communication network which reduces the burden of storage and processing requirements on the programmable socket. This provides a simpler and more cost-efficient programmable socket (and system of programmable sockets). The communication network may be a user equipment device, such as user equipment device described above. This provides a further ease of use for a user and reduces the burden of cost because fewer components are required.

## Claims

1. A programmable socket (100) comprising:
a housing with a first surface (102) and a second surface (104) opposite to the first surface;
a male electrical connector (106) protruding from the first surface (102), the male electrical connector operable to engage with a female electrical connector of a socket;
a female electrical connector (108) on the second surface (104), the female electrical connector operable to receive a second male electrical connector; and
an electronic circuit within the housing, the electronic circuit comprising:
at least one sensor(1 10a-d),
a wireless communication interface (112),
at least one loudspeaker (114a-d),
a processor and memory coupled to the at least one sensor, the wireless communication interface and the at least one loudspeaker.

2. The programmable socket of claim 1, wherein the wireless communication interface comprises a transceiver that is operable to:
receive data from a user equipment device; and
send the received data to the memory of the electronic circuit, wherein the data comprises sound files, and/or playback settings.

3. The programmable socket of claim 2, wherein the electronic circuit is operable to:
receive, by the at least one sensor, a signal;
send the signal to the processor;
retrieve, by the processor and the memory, a sound file and playback settings associated with the at least one sensor; and
play back, by the at least one loudspeaker, the sound file with the playback settings associated with the at least one sensor.

4. The programmable socket of claim 3, wherein the at least one loudspeaker is operable to:
play back a first stored sound file when a first one of the at least one sensors is engaged;
play back the first stored sound file or a second stored sound file when a second one of the at least one sensors is engaged;
playback the first stored sound file, the second stored sound file or a third stored sound file when two or more of the at least one sensors are engaged; or
playback the first stored sound file, the second stored sound file, the third stored sound or a fourth stored sound file when three or more of the at least one sensors are engaged.

5. The programmable socket of claim 4, wherein the at least one loudspeaker is operable to:
play back the first stored sound file with first playback settings;
play back the second stored sound with second playback settings;
play back the third stored sound file with third playback settings; or
play back the fourth stored sound file with fourth playback settings.

6. The programmable socket of the claims above, wherein the at least one sensor comprises:
a noise sensor;
a motion sensor;
a light sensor;
a temperature sensor;
an electricity consumption meter; or
any combination of the above.

7. The programmable socket of claim 6, wherein the electricity consumption meter is operable to detect an amount of current drawn from the socket when an electrical device is plugged into the female electrical connector, and wherein the loudspeaker is operable to playback a sound file when the current drawn from the socket is:
at a predetermined threshold;
above the predetermined threshold; or
below the predetermined threshold.

8. The programmable socket of any of the above claims wherein:
a first of the at least one loudspeakers is operable to play back a first sound file;
a second of the at least one loudspeakers is operable to play back a second sound file;
a third of the at least one loudspeakers is operable to play back a third sound file; and/or
a fourth of the at least one loudspeakers is operable to play back a fourth sound file.

9. The programmable socket of any one of the above claims, wherein the electronic circuit is powered by a current provided by the socket.

10. The programmable socket of claim 9, further comprising a battery operable to provide power to the electronic circuit when the current drops below a predetermined threshold.

11. The programmable socket of any of the above claims wherein:
the male electrical connector and the female electrical connector each comprise a positive electrical connection, a negative electrical connection, and a ground electrical connection;
the positive electrical connection of the male electrical connector is coupled to the positive electrical connection of the female electrical connector;
the negative electrical connection of the male electrical connector is coupled to the negative electrical connection of the female electrical connector; and
the ground electrical connection of the male electrical connector is coupled to the ground electrical connection of the female electrical connector.

12. The programmable socket of any of the above claims, further comprising a fuse electrically coupled between the male electrical connector and the electronic circuit.

13. A system (200) comprising a plurality of programmable sockets (100a-c) as set out in claims 1 to 12, wherein:
a first of the plurality of programmable sockets (100a-c) is operable to send a command, by the wireless communications interface of the first programmable socket, to a second of the plurality of programmable sockets (100a-c);
the command is sent when at least one of the sensors of the first of the plurality of programmable sockets detects a signal; and
the second of the plurality of programmable sockets plays back a sound file from the at least one loudspeaker of the second programmable socket when the second of the plurality of programmable sockets receives the command.

14. The system of claim 13 further comprising a communication network (202), wherein the wireless communications interface of each of the plurality programmable sockets is operable to send the command to the communication network and wherein the communication network is operable to send the command to the each of the plurality of programmable sockets.

15. The system of claim 14, wherein the communication network includes a user equipment device.
